# EUROPÄISCHE PATENTSCHRIFT

(11) **EP 3 597 012 B1**
(45) Veröffentlichungstag und Bekanntmachung des Hinweises auf die Patenterteilung: **27.07.2022**
(21) Anmeldenummer: 18711917.7
(22) Anmeldetag: 15.03.2018
(51) Int. Cl.: H05B 47/115, F21V 23/04

(54) **INTELLIGENTE STEUERUNG DER LICHTCHARAKTERISTIK**
INTELLIGENT CONTROL OF THE LIGHT CHARACTERISTIC
COMMANDE INTELLIGENTE DE LA CARACTÉRISTIQUE LUMINEUSE

(30) Priorität: 16.03.2017 DE 102017204429
(43) Veröffentlichungstag der Anmeldung: 22.01.2020
(73) Patentinhaber: Zumtobel Lighting GmbH, 6850 Dornbirn (AT)
(72) Erfinder: SIEGEL, Martin, 88097 Eriskirch (DE); ESS, Nikolaus, 6822 Satteins (AT); VON TERZI, Stefan, 81547 München (DE); PAMMINGER, Herbert, 83395 Freilassing (DE)
(74) Vertreter: Banzer, Hans-Jörg
(86) Internationale Anmeldenummer: PCT/EP2018/056599
(87) Internationale Veröffentlichungsnummer: WO 2018/167239

(56) Entgegenhaltungen:
- EP-A2- 0 476 562
- DE-A1-102013 204 145
- US-B1- 9 538 626

## Beschreibung

### TECHNISCHES GEBIET

Verschiedene Beispiele der Erfindung betreffen im Allgemeinen Techniken, um eine Lichtcharakteristik einer Beleuchtungseinrichtung zum Beleuchten mindestens einer Szene in einem Gebiet zu steuern. Verschiedene Beispiele der Erfindung betreffen insbesondere das Bestimmen der Lichtcharakteristik basierend auf Messdaten, die indikativ für ein Verhalten eines Personenstroms in dem Gebiet sind.

### HINTERGRUND

Das Lenken von Personenströmen kann in verschiedenen Anwendungsfällen erstrebenswert sein. Beispiele umfassen insbesondere Gebäude oder Räume mit vergleichsweise geringer Fläche pro Teilnehmer des Personenstroms. Weitere Beispiele umfassen Gebäude oder Räume mit einer großen Geschwindigkeit des Personenstroms, d.h. vielen Teilnehmern pro Zeit, die ein bestimmtes Gebiet durchlaufen. Beispielsweise in Bahnhöfen oder Flughäfen kann es erforderlich sein, eine Lenkung der Personenströme zur Vermeidung von Verdichtungen oder Verzögerungen des Personenstroms zu steuern.

Oftmals ist es möglich, dass das Verhalten eines Personenstroms in einem Gebäude oder Raum als Funktion der Zeit variiert. Beispielsweise kann sich der Personenstroms vormittags anders verhalten als nachmittags, etc.. Dann kann es erforderlich sein, eine aktive Lenkung des Personenstroms durch geeignetes, zeitveränderliches Einwirken auf die Teilnehmer des Personenstroms vorzunehmen. Referenzimplementierungen benutzen beispielsweise veränderliche Beschilderung zur zeitveränderlichen Lenkung der Personenströme. Andere Referenzimplementierungen zur Lenkung von Personenströmen verwenden bewegliche Führungselemente, beispielsweise steuerbare Türen oder Barrieren, etc..

Solche Referenzimplementierungen zur Lenkung von Personenströmen können aber bestimmte Nachteile und Einschränkungen aufweisen. Beispielsweise kann es aufgrund von Randbedingungen manchmal nicht oder nur eingeschränkt möglich sein, aktive Maßnahmen zur Lenkung von Personenströmen zu treffen. Zum Beispiel kann es Bauraum bedingt nicht oder nur eingeschränkt möglich sein, steuerbare Türen etc. vorzusehen. Außerdem kann in manchen Beispielen eine aktive Adressierung von Teilnehmern eines Personenstroms nicht gewünscht oder wenig effizient sein.

Ein Verfahren zum Ansteuern einer Beleuchtungseinrichtung gemäß dem Oberbegriff des Anspruchs 1 ist aus der Druckschrift US 9,538,626 B1 bekannt.

### KURZE ZUSAMMENFASSUNG DER ERFINDUNG

Es besteht somit ein Bedarf für verbesserte Techniken zur Lenkung von Personenströmen. Insbesondere besteht ein Bedarf für solche Techniken, die zumindest einige der oben genannten Nachteile oder Einschränkungen beheben.

Diese Aufgabe wird durch ein Verfahren mit den Merkmalen des Anspruchs 1 und eine Steuerung mit den Merkmalen des Anspruchs 14 gelöst. Die Merkmale der abhängigen Patentansprüche definieren Ausführungsformen.

Das Verfahren der vorliegenden Erfindung umfasst das Ansteuern einer Beleuchtungseinrichtung zum Beleuchten mindestens einer Szene in einem Gebiet mit einer ersten Lichtcharakteristik. Das Verfahren umfasst auch das Empfangen von Messdaten, die indikativ für ein Verhalten eines Personenstroms in dem Gebiet beim Beleuchten der mindestens einen Szene mit der ersten Lichtcharakteristik sind. Das Verfahren umfasst das Bestimmen einer zweiten Lichtcharakteristik basierend auf den Messdaten, sowie das Ansteuern der Beleuchtungseinrichtung zum Beleuchten der mindestens einen Szene mit der zweiten Lichtcharakteristik.

Beispielsweise kann eine Szene ein Teilgebiet des Gebiets bezeichnen. Das Gebiet kann also mehrere Szenen umfassen. Das Gebiet könnte beispielsweise ein Gebäude oder ein Raum sein oder ein sonst wie definierter Bereich. Das Gebiet könnte zum Beispiel einen oder mehrere Eingänge für den Personenstrom aufweisen; sowie ein oder mehrere Ausgänge für den Personenstrom. Die Trajektorie des Personenstroms zwischen dem ein oder den mehreren Eingängen und den ein oder mehreren Ausgängen kann entlang ein oder mehrerer Szenen des Gebiets verlaufen. Die Trajektorie des Personenstroms kann Verzweigungen aufweisen.

Der Personenstrom kann ein Ensemble aus Teilnehmern beschreiben. Der Personenstrom kann beispielsweise durch unterschiedliche Verhalten beschrieben werden, wie beispielsweise die Geschwindigkeit des Personenstroms, Verdichtungen des Personenstroms, Aufweitungen des Personenstroms, einen Verzweigungsfaktor des Personenstroms oder durch einen Attraktivitätsfaktor von Szenen für den Personenstrom. Aufgrund solcher makroskopischer Eigenschaften des Personenstroms kann auch das Verhalten einzelner Teilnehmer vorhergesagt werden. Beispielsweise könnte die Geschwindigkeit des Personenstroms indikativ für die Zeitdauer sein, die einzelne Teilnehmer des Personenstroms an unterschiedlichen Szenen des Gebiets verbringen. Verdichtungen des Personenstroms können daraus resultieren, dass mehrere Teilnehmer des Personenstroms besonders lange an ein oder mehreren bestimmten Szenen des Gebiets verweilen. Je nach Geometrie des Gebiets kann es möglich sein, dass der Personenstrom Verästelungen aufweist, sodass der Verzweigungsfaktor des Personenstroms einen großen Wert annimmt. Dies bedeutet, dass individuelle Teilnehmer des Personensturms die Möglichkeit haben können, unterschiedliche Trajektorien durch das Gebiet zu wählen, d.h. unterschiedliche Szenen zu besuchen. Dies kann mit dem Attraktivitätsfaktor korrelieren, der beschreiben kann, welcher Bruchteil aller Teilnehmer des Personenstroms eine bestimmte Szene besucht.

In den verschiedenen hierin beschriebenen Beispielen wäre es möglich, dass die Messdaten indikativ für solche Charakteristiken des Personenstroms, wie beispielsweise dessen Geschwindigkeit, eine Verdichtung oder ein Verzweigungsfaktor ein oder mehrerer der Szenen des Gebiets sind.

Durch das Bestimmen der zweiten Lichtcharakteristik basierend auf den Messdaten kann eine Anpassung der Lichtcharakteristik auf das gemessene Verhalten des Personenstroms erfolgen. Dadurch kann der Personenstrom geeignet gelenkt werden. Durch die Überwachung des tatsächlichen Verhaltens, kann eine besonders genaue Lenkung des Personenstroms ermöglicht werden. Solche Techniken basieren auf der Erkenntnis, dass ein Zusammenhang zwischen der verwendeten Lichtcharakteristik für die mindestens eine Szene in dem Gebiet und das Verhalten des Personenstroms existieren kann. Beispielsweise können manche Lichtcharakteristiken besonders attraktiv oder unattraktiv für Teilnehmer des Personenstroms wirken, so das eine entsprechende Lenkung des Personenstroms möglich wird.

In den verschiedenen hierin beschriebenen Beispielen können unterschiedliche Typen von Lichtcharakteristiken berücksichtigt werden. Beispielsweise könnte die verwendete Lichtcharakteristik aus folgender Gruppe ausgewählt sein: Lichtstärke; Lichtkontrast; Lichtdruck; und Lichtfarbe. Ein oder mehrerer solcher vorgenannter Lichtcharakteristiken können auch kombiniert eingestellt werden.

In den verschiedenen hierin beschriebenen Beispielen können unterschiedliche Zielgrößen für die Lenkung des Personenstroms beim Bestimmen der zweiten Lichtcharakteristik berücksichtig werden. Beispielsweise könnte eine zielgerichtete Lenkung des Personenstroms entlang bestimmter Trajektorien durch das Gebiet gewünscht sein. Dann kann die zweite Lichtcharakteristik weiterhin basierend auf einer solchen Zielgröße bestimmt werden. Weitere Beispiele für Zielgrößen umfassen: Vermeidung von Verdichtungen; Vermeidung von bestimmten Szenen; Lenkung zu bestimmten Szenen; Vergrößerung oder Verkleinerung der Geschwindigkeit des Personenstroms in Bezug auf bestimmte Szenen.

Der beobachtete Zusammenhang zwischen dem Verhalten des Personenstroms und der verwendeten Lichtcharakteristik wird erfindungsgemäß durch einen Regelkreis gezielt ausgenutzt, der ein Soll-Verhalten des Personenstroms - das beispielsweise basierend auf ein oder mehreren Zielgrößen bestimmt wird - als Führungsgröße, die Messdaten als Regelgröße und die zweite Lichtcharakteristik der Beleuchtungseinrichtung als Steuergröße aufweist. Dies kann also bedeuten, dass die zweite Lichtcharakteristik der Beleuchtungseinrichtung mehrfach iterativ verändert wird, bis die Messdaten ein Verhalten des Personenstroms indizieren, dass dem Soll-Verhalten entspricht. Beispielsweise könnten inkrementelle Änderungen der zweiten Lichtcharakteristik dazu verwendet werden, um entsprechende Änderungen in dem Verhalten des Personenstroms durch die Messdaten abzubilden, bis schließlich der Personenstrom das Soll-Verhalten erreicht hat. Bei der Verwendung eines solchen Regelkreises kann es entbehrlich sein, a-priori
Wissen über das Verhalten des Personenstroms in Abhängigkeit der verwendeten Lichtcharakteristik, zum Beispiel im Rahmen eines vorbestimmten Modells, zu verwenden. Außerdem kann der Personenstrom besonders robust gelenkt werden, d.h. unter Berücksichtigung verschiedener zeitvariabler Störgrößen etc.

Manchmal kann aber auch a-priori Wissen über das Verhalten des Personenstroms in Abhängigkeit der verwendeten Lichtcharakteristik vorhanden sein. Dieses a-priori Wissen kann dann beim Bestimmen der zweiten Lichtcharakteristik berücksichtigt werden. Ein Beispiel für die Berücksichtigung des a-priori Wissens benutzt ein Modell: beispielsweise wäre es auch möglich, dass die zweite Lichtcharakteristik basierend auf einem Modell des Verhaltens des Personenstroms in Abhängigkeit der zweiten Lichtcharakteristik bestimmt wird.

Das Modell kann vorbestimmt sein. Das Modell kann eine Annahme bereitstellen, wie eine bestimmte Änderung der verwendeten Lichtcharakteristik das Verhalten des Personenstroms beeinflussen wird. Das Modell kann also einen Einfluss der zweiten Lichtcharakteristik auf das Verhalten des Personenstroms antizipieren. Mittels solcher Techniken kann es möglich sein, ein gewünschtes Verhalten des Personenstroms besonders schnell durch zielgerichtete Implementierung der zweiten Lichtcharakteristik zu erreichen. Damit kann der Personenstrom besonders effizient gelenkt werden.

In manchen Beispielen könnte das Modell empirisch trainiert werden. Dazu können beispielsweise Techniken des maschinellen Lernens, etwa deep learning etc., eingesetzt werden. Gewichte von neuronalen Netzwerken können eingestellt werden.

Für solches Trainieren wäre es möglich, die Messdaten über eine Zeitdauer zu überwachen, beispielsweise über mindestens 10 Minuten, optional mindestens 30 Minuten, weiter optional mindestens 120 Minuten. Es wurde beobachtet, dass während solcher Zeitdauern eine signifikante Statistik über das Verhalten des Personenstroms gesammelt werden kann, wobei gleichzeitig das Verhalten des Personenstroms noch keinen oder keinen signifikanten Änderungen unterworfen sein kann. Anschließend könnte das Modell basierend auf dem Überwachen der Messdaten trainiert werden. Beispielsweise können bestimmte Grundannahmen, die durch das Modell abgebildet werden, auf Grundlage des Überwachens der Messdaten überprüft werden und gegebenenfalls angepasst werden, wenn eine Abweichung festgestellt wird. Durch das Trainieren des Modells kann erreicht werden, dass eine besonders genaue Lenkung des Personenstroms ermöglicht wird und das gegebenenfalls auftretende zeitliche Drifts in der Abhängigkeit des Verhaltens des Personenstroms von der verwendeten Lichtcharakteristik adaptiv durch Anpassung des Modells berücksichtigt werden können. Außerdem können bestimmte lokale Eigenheiten des Verhaltens des Personenstroms, die beispielsweise spezifisch für das betrachtete Gebiet sind, durch das Trainieren in dem Modell abgebildet werden. Dies kann insbesondere dann vorteilhaft sein, wenn weiterhin Referenz-Messdaten zum Trainieren des Modells berücksichtigt werden, die für weitere Gebiete - die andere Eigenheiten im Verhalten des Personenstroms aufweisen können - berücksichtigt werden.

In manchen Beispielen könnte eine größere Datengrundlage zum Trainieren des Modells als lediglich die Messdaten, die indikativ für das Verhalten des Personenstroms in dem jeweiligen Gebiet sind, verwendet werden. Beispielsweise wäre es möglich, dass Referenz-Messdaten empfangen werden, welche indikativ für ein Verhalten mindestens eines weiteren Personenstroms in mindestens einem weiteren Gebiet sind. Dann könnte das Modell basierend auf den Referenz-Messdaten trainiert werden. Die Referenz-Messdaten können also in anderen Worten empirische Beobachtungen betreffen, die einen Zusammenhang zwischen der verwendeten Lichtcharakteristik und dem Verhalten von Personenströmen in anderen Gebieten betreffen, als dasjenige Gebiet, auf welches das Modell anschließend angewendet wird.

Dies kann beispielsweise möglich sein, wenn bestimmte Gemeinsamkeiten vorliegen, wie beispielsweise die verwendeten Lichtcharakteristiken, die Typen der Szenen in den Gebieten oder die geometrische Beziehung der Szenen in den Gebieten. Das Berücksichtigen einer besonders großen Datengrundlage kann es ermöglichen, das Modell besonders umfassend und genau auszubilden. Insbesondere kann dadurch erreicht werden, dass das Modell das Verhalten des Personenstroms in Abhängigkeit von der verwendeten Lichtcharakteristik besonders genau beschreibt. Um lokale Eigenheiten des betrachteten Gebiets geeignet in dem Modell abzubilden, wäre es beispielsweise möglich, Messdaten, die für das betrachtete Gebiet selbst erfasst wurden, beim Trainieren des Modells stärker zu berücksichtigen, als Referenz-Messdaten, die indikativ für das Verhalten von weiteren Personenströmen in weiteren Gebieten sind.

Das Modell kann die Abhängigkeit des Verhaltens des Personenstroms von der verwendeten Lichtcharakteristik unter Berücksichtigung von ein oder mehreren Parametern beschreiben. Ein beispielhafter Parameter wäre die geometrische Anordnung der mindestens einen Szene in dem Gebiet. Deshalb wäre es also möglich, dass das Modell unterschiedliche Verhalten des Personenstroms in Abhängigkeit der zweiten Lichtcharakteristik für unterschiedliche geometrische Anordnung in der mindestens einen Szene in dem Gebiet beschreibt. Beispielsweise wäre es möglich, dass das Modell für eine Szene, die nahe am Eingang oder am Ausgang des Gebiets positioniert ist, ein anderes Verhalten des Personenstroms in Abhängigkeit der verwendeten Lichtcharakteristik vorhersagt, als für eine Szene, die entfernter von dem Eingang oder dem Ausgang des Gebiets positioniert ist. Entsprechend wäre es beispielsweise möglich, dass das Modell für eine Szene, die von Teilnehmern des Personenstroms alternativlos oder mit wenigen Alternativen bei der Bewegung vom Eingang zum Ausgang gesucht werden muss, ein anderes Verhalten des Personenstroms von der verwendeten Lichtcharakteristik vorhersagt, als für eine Szene, für welche viele alternative Szenen für Teilnehmer des Personenstroms verfügbar sind. Durch das berücksichtigen der geometrischen Anordnung der mindestens einen Szene in dem Gebiet kann das Modell das Verhalten des Personenstroms in Abhängigkeit von der verwendeten Lichtcharakteristik besonders genau vorhersagen.

Ein weiterer Parameter, der von dem Modell berücksichtigt werden kann, sind zum Beispiel unterschiedliche Typen der betrachteten Szenen. Alternativ oder zusätzlich können auch unterschiedliche Typen des Gebiets als Parameter berücksichtigt werden. Beispielsweise könnte das Modell für eine Szene, die einem Durchgangsbereich des Gebiets ohne Aufenthaltsmöglichkeiten für die Teilnehmer des Personenstroms entspricht, ein anderes Verhalten des Personenstroms in Abhängigkeit der verwendeten Lichtcharakteristik vorhersagen, als für eine Szene, bei welcher Handlungen von Teilnehmern des Personenstroms möglich oder gefordert sind und damit Aufenthaltsmöglichkeiten für die Teilnehmer des Personenstroms bestehen. Beispiele für Typen von Gebieten umfassen beispielsweise: Flughäfen; Bahnhöfe; Bürogebäude; Einkaufszentren; Selbstbedienungsgeschäfte; Hotels; Seminargebäude; etc.. Beispiele für Typen von Szenen betreffen beispielsweise für Flughäfen oder Bahnhöfe: Eingangsbereich; Wartebereich; Sicherheitskontrolle; Gatebereich; Einzelhandelsbereich; Restaurantbereich; Transferbereich; Zollbereich; Gepäcksbereich; etc. Beispiele für Typen von Szenen für Einzelhandelsgeschäfte betreffen beispielsweise: Eingangsbereich; Kassenbereich; Verkaufsbereich; Verkaufsbereich für bestimmte Produkte wie Tiefkühlabteilung, Frischwarentheke, Gemüse- und Obst, etc.; Restaurantbereich; etc.

Ein weiterer Parameter, der von dem Modell berücksichtigt werden kann, betrifft einen oder mehrere Umgebungsparameter. Deshalb wäre es beispielsweise möglich, dass das Modell unterschiedliche Verhalten des Personenstroms in Abhängigkeit der zweiten Lichtcharakteristik für unterschiedliche Werte mindestens eines Umgebungsparameters der mindestens einen Szene und/oder des Gebiets beschreibt. Umgebungsparameter können beispielsweise Parameter sein, die extrinsisch definiert sind, d.h. nicht unmittelbar abhängig vom Personenstrom. Beispiele für solche Umgebungsparameter können beispielsweise umfassen: Tageszeit; Wetter; Wochentag; Tageslichthelligkeit; Außentemperatur; und Innentemperatur. Beispielsweise könnte also das Modell periodisch dasselbe Verhalten des Personenstroms in Abhängigkeit von der verwendeten Lichtcharakteristik für dieselbe Tageszeit oder denselben Wochentag vorhersagen. Solchen Techniken liegt die Erkenntnis zugrunde, dass die Teilnehmer von Personenströmen in Abhängigkeit von solchen Umgebungsparametern variieren können. Deshalb kann eine genauere Vorhersage des Verhaltens des Personenstroms in Abhängigkeit von der verwendeten Lichtcharakteristik erfolgen, wenn das Modell ein oder mehrerer solcher Umgebungsparameter als Parameter berücksichtigt. Im Allgemeinen kann es möglich sein, dass entsprechende Steuerdaten empfangen werden, die indikativ für mindestens einen Umgebungsparameter der mindestens einen Szene und/oder des Gebiets sind. Beispielsweise können solche Steuerdaten von entsprechenden Messgeräten empfangen werden. Andere Daten, wie beispielsweise der Wochentag oder die Tageszeit, können von einer zentralen Stelle empfangen werden. Das Bestimmen der zweiten Lichtcharakteristik kann dann weiterhin auf den Steuerdaten basieren.

In manchen Beispielen wäre es möglich, dass die zweite Lichtcharakteristik weiterhin basierend auf einer vorgegebenen Änderungsrate ausgehend von der ersten Lichtcharakteristik bestimmt wird. Beispielsweise könnte die Änderungsrate eine maximale Änderung der Lichtcharakteristik pro Zeit beschreiben. Dadurch kann erreicht werden, dass die Lichtcharakteristik nicht abrupt oder schlagartig verändert wird, was in Bezug auf die Lenkung des Personenstroms negative Auswirkungen haben könnte. Im Rahmen des oben stehend beschriebenen Regelkreises könnte eine solche Änderungsrate als Trägheit des Regelkreises bzw. maximal inkrementelle Änderung zwischen Regelzyklen berücksichtigt werden. Beispielsweise könnte eine Änderung der Farbtemperatur über einen Zeitraum von mehreren Minuten, beispielsweise nicht weniger als 5 Minuten oder nicht weniger als 15 Minuten implementiert werden. Eine Änderung der Helligkeit, die beispielsweise eine relative Stärke von 5 % gegenüber der maximalen Helligkeit überschreitet, könnte auch über einen Zeitraum von mehreren Minuten, beispielsweise nicht weniger als 5 Minuten oder nicht weniger als 15 Minuten implementiert werden. In den verschiedenen hierin beschriebenen Beispielen wäre es möglich, dass die Änderungsrate der Lichtcharakteristik einer Zeitdauer entspricht, die größer ist, als eine typische Verweildauer von Teilnehmern des Personenstroms in der mindestens eine Szene. Derart kann vermieden werden, dass einzelne Teilnehmer des Personenstroms durch die Änderung der Lichtcharakteristik verunsichert oder negativ beeinflusst werden. Dadurch kann ein unkontrolliertes Verhalten des Personenstroms vermieden werden.

In manchen Beispielen kann es möglich sein, dass ein oder mehrere Messgeräte zum Erfassen der Messdaten angesteuert werden. Dabei können in den verschiedenen hierin beschriebenen Beispielen unterschiedlichste Arten und Typen von Messgeräten verwendet werden. Je nach Typ des verwendeten Messgeräts werden unterschiedliche Observablen gemessen. Beispiele für solche gemessenen Observablen umfassen: instantane Geschwindigkeit des Personenstroms an ein oder mehreren Szenen; gemittelte Geschwindigkeit des Personenstroms an ein oder mehreren Szenen; und Position von Teilnehmern des Personenstroms in Bezug auf ein oder mehrere Szenen.

Beispielsweise könnte die instantane Geschwindigkeit des Personenstroms die über ein besonders kurzes Zeitintervall definierte Geschwindigkeit des Personenstroms bezeichnen, beispielsweise über eine oder wenige Sekunden integriert. Dagegen könnte die gemittelte Geschwindigkeit des Personenstroms eine größere zeitliche Mittelung der Geschwindigkeit aufweisen, die insbesondere größer sein kann, als die typische Änderungsrate der Geschwindigkeit des Personenstroms. Beispielsweise könnte die gemittelte Geschwindigkeit des Personenstroms über einen Zeitraum von Minuten oder mehr gemittelt sein. Eine solche gemittelte Geschwindigkeit - oder im Allgemeinen gemittelte Observablen in Bezug auf den Personenstrom - können beispielsweise durch integrierte Messungen erhalten werden, etwa durch Messgeräte, die am mindestens einen Eingang und/oder am mindestens einen Ausgang des Gebiets platziert sind. Beispielsweise könnte eine differenzielle Messung zwischen zwei Punkten entlang des Personenstroms eine solche gemittelte Geschwindigkeit bereitstellen. Entsprechend könnte die gemittelte Geschwindigkeit auch eine Mittelung in Bezug auf mehrere Szenen betreffen, die sequenziell vom Personenstrom durchlaufen werden. In anderen Beispielen wäre es auch möglich, individuelle Teilnehmer des Personenstroms zu erfassen, beispielsweise deren Position oder Geschwindigkeit, und daraus Rückschlüsse über das Verhalten des Ensembles von Teilnehmern, d.h. das Verhalten des Personenstroms, zu treffen.

Um solche Observablen oder andere Observablen zu messen, können unterschiedliche Messgeräte verwendet werden. Ein beispielhaftes Messgerät könnte eine Videokamera umfassen, mittels welcher individuelle Teilnehmer des Personenstroms auf Videodaten abgebildet werden. Dann könnte mittels einer Objekterkennung das Verhalten der verschiedenen Teilnehmer des Personenstroms analysiert werden und daraus auf das Verhalten des Personenstroms zurückgeschlossen werden. Andere Beispiele können zum Beispiel Durchgangszählung betreffen, beispielsweise am Eingang oder am Ausgang eines Gebiets. Zum Beispiel könnte in Bezug auf Ladengeschäfte eine Durchgangszählung durch Betrachtung von Kassendaten erfolgen. Dabei könnte insbesondere die Anzahl der gekauften Elemente oder der getätigte Umsatz individueller Teilnehmer des Personenstroms eine Aussage betreffend die gemittelte Geschwindigkeit des Personenstroms ermöglichen. Durch eine Zuordnung der Typen der gekauften Gegenstände zu unterschiedlichen Szenen des Gebiets kann daraus auch eine Information über die gemittelte Geschwindigkeit des Personenstroms an den entsprechenden Szenen getätigt werden. Mittels solcher ohnehin verfügbarer Information kann also eine akkurate Bestimmung des Verhaltens des Personenstroms an den unterschiedlichen Szenen innerhalb des Gebiets getätigt werden. Dies reduziert die technische Komplexität, da oftmals keine zusätzlichen Messgeräte benötigt werden.

Eine Steuerung umfasst mindestens einen Prozessor. Der mindestens eine Prozessor ist eingerichtet, um die folgenden Schritte durchzuführen: Ansteuern einer Beleuchtungseinrichtung zum Beleuchten mindestens einer Szene in einem Gebiet mit einer ersten Lichtcharakteristik; Empfangen von Messdaten, die indikativ für ein Verhalten eines Personenstroms in dem Gebiet beim Beleuchten der mindestens einen Szene mit der ersten Lichtcharakteristik sind; Bestimmen einer zweiten Lichtcharakteristik basierend auf den Messdaten; sowie Ansteuern der Beleuchtungseinrichtung zum Beleuchten der mindestens einen Szene mit der zweiten Lichtcharakteristik.

Beispielsweise umfasst ein nicht beanspruchtes Computerprogramm-Produkt Programm-Code, der von mindestens einem Prozessor ausgeführt werden kann. Ausführen des Programm-Codes bewirkt, dass der mindestens eine Prozessor die folgenden Schritte durchführt: Ansteuern einer Beleuchtungseinrichtung zum Beleuchten mindestens einer Szene in einem Gebiet mit einer ersten Lichtcharakteristik; Empfangen von Messdaten, die indikativ für ein Verhalten eines Personenstroms in dem Gebiet beim Beleuchten der mindestens einen Szene mit der ersten Lichtcharakteristik sind; Bestimmen einer zweiten Lichtcharakteristik basierend auf den Messdaten; und Ansteuern der Beleuchtungseinrichtung zum Beleuchten der mindestens einen Szene mit der zweiten Lichtcharakteristik.

Ein Verfahren umfasst das Ansteuern einer Beleuchtungseinrichtung zum Beleuchten mindestens einer Szene in einem Gebiet mit einer ersten Lichtcharakteristik. Das Verfahren umfasst auch das Empfangen von Messdaten, die indikativ für ein Verhalten mindestens einer Person in dem Gebiet beim Beleuchten der mindestens einen Szene mit der ersten Lichtcharakteristik sind. Das Verfahren umfasst das Bestimmen einer zweiten Lichtcharakteristik basierend auf den Messdaten, sowie das Ansteuern der Beleuchtungseinrichtung zum Beleuchten der mindestens einen Szene mit der zweiten Lichtcharakteristik.

Eine Verwendung einer Beleuchtungseinrichtung zum Beleuchten mindestens einer Szene in einem Gebiet mit einer Lichtcharakteristik zur Lenkung eines Personenstroms ist offenbart.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

FIG. 1 illustriert schematisch ein System umfassend eine Steuerung, Leuchten, sowie Messgeräte, wobei das System gemäß verschiedener Beispiele zur Lenkung eines Personenstroms durch ein Gebiet mit mehreren durch die Leuchten beleuchteten Szenen eingerichtet ist.
FIG. 2 illustriert schematisch eine Zuordnung zwischen Szenen des Gebiets und Leuchten sowie Messgeräten gemäß verschiedener Beispiele.
FIG. 3 illustriert schematisch eine geometrische Anordnung der Szenen in dem Gebiet gemäß verschiedener Beispiele.
FIG. 4 ist ein Flussdiagramm eines Verfahrens gemäß verschiedener Beispiele.
FIG. 5 ist ein Flussdiagramm eines Verfahrens gemäß verschiedener Beispiele.
FIG. 6 illustriert schematisch ein Modell für eine Geschwindigkeit eines Personenstroms in Abhängigkeit von der verwendeten Lichtstärke zur Beleuchtung von Szenen gemäß verschiedener Beispiele, wobei FIG. 6 eine Parametrisierung des Modells für unterschiedliche Typen von Szenen illustriert.
FIG. 7 illustriert schematisch ein Modell für eine Geschwindigkeit eines Personenstroms in Abhängigkeit von der verwendeten Lichtstärke zur Beleuchtung von Szenen gemäß verschiedener Beispiele, wobei FIG. 7 eine Parametrisierung des Modells für verschiedene Tageszeiten illustriert.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden verschiedene Techniken in Bezug auf das Lenken von Personenströmen durch Gebiete beschrieben. Die hierin beschriebenen Techniken können beispielsweise Anwendung finden für die Lenkung von Personenströmen durch Flughäfen, Bahnhöfe, Ladengeschäfte, Einkaufszentren, etc. Im Allgemeinen können die hierin beschriebenen Techniken also flexibel dort eingesetzt werden, wo eine Lenkung von Personenströmen mit vielen Teilnehmern durch Gebiete erstrebenswert ist. Solche Techniken ermöglichen es, den oftmals beschränkten Platz insbesondere in Innenstädten effizient auszunutzen und Verzögerungen oder Behinderungen für individuelle Teilnehmer von Personenströmen zu vermeiden. Dies fördert im Allgemeinen auch die Sicherheit im Betrieb von Einrichtungen. Je nach Art der gewünschten Lenkung können unterschiedliche Zielgrößen in Bezug auf das Verhalten des Personenstroms erzielt werden.

Verschiedene hierin beschriebene Techniken beruhen auf der Erkenntnis, dass eine Lenkung von Personenströmen durch ein Gebiet mit mehreren Szenen dadurch möglich ist, dass die Beleuchtung von einer oder mehrerer der Szenen in dem Gebiet mit einer geeignet gewählten Lichtcharakteristik erfolgt. Beispiele für solche Lichtcharakteristiken umfassen die Lichtstärke, den Lichtkontrast, den Lichtdruck und die Lichtfarbe. Eine solche Beeinflussung von Teilnehmern eines Personenstroms kann eine statistisch signifikante Lenkung des Personenstroms als Ensemble aus mehreren Teilnehmern bewirken. Beispielsweise wurde beobachtet, dass bestimmte Lichtfarben besonders attraktiv oder unattraktiv auf Teilnehmer eines Personenstroms wirken, sodass bei der Verwendung der entsprechenden Lichtfarbe die Attraktivität der entsprechenden Szene für den Personenstrom gezielt gesteigert oder gesenkt werden kann. Dadurch kann beispielsweise erreicht werden, dass - je nach gewünschter Zielgröße der Lenkung des Personenstroms - mehr oder weniger Teilnehmer des Personenstroms die entsprechende Szene besuchen. Entsprechende Zusammenhänge können auch für andere Lichtcharakteristiken beobachtet werden.

Um eine möglichst genaue und zielgerichtete Lenkung des Personenstroms zu gewährleisten, werden in verschiedenen Beispielen Messdaten, die indikativ für das Verhalten des Personenstroms in dem Gebiet beim Beleuchten von mindestens einer Szene des Gebiets mit einer ersten Lichtcharakteristik sind, empfangen. Dann kann basierend auf den Messdaten eine zweite Lichtcharakteristik bestimmt werden und eine Beleuchtungseinrichtung zum Beleuchten der mindestens einen Szene mit der zweiten Lichtcharakteristik angesteuert werden. Solche Techniken ermöglichen es also, die verwendete Lichtcharakteristik abzustimmen auf das beobachtete Verhalten des Personenstroms.

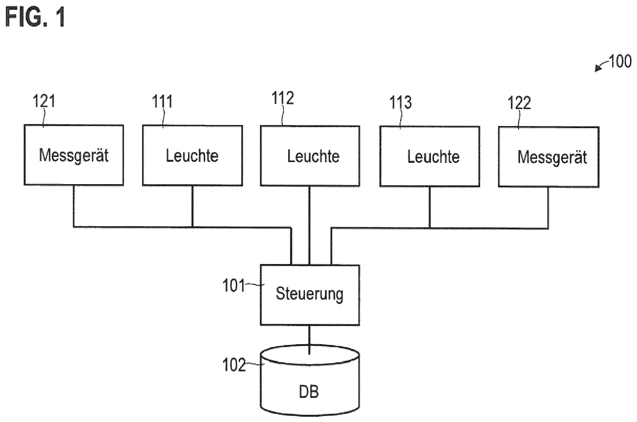

FIG. 1 illustriert Aspekte in Bezug auf ein System 100, das zur Lenkung von Personenströmen gemäß verschiedener hierin beschriebener Beispiele eingerichtet ist. Das System 100 umfasst mehrere Leuchten 111-113.

Beispiele für Leuchten umfassen: Leuchtdioden, Leuchtdioden-Arrays, Halogenlampen, Gasentladungslampen, Glühlampen, etc.. Dazu können die Leuchten 111-113 von einer Steuerung 101 angesteuert werden. Die Leuchten 111-113 sind eingerichtet, um unterschiedliche Lichtcharakteristiken zu implementieren. Beispielsweise können Steuerdaten, die von der Steuerung 101 an die Leuchten 111-113 übertragen werden, die gewünschte Lichtcharakteristik indizieren. Die Kommunikationsverbindung zwischen der Steuerung 101 in den Leuchten 111-113 kann beispielsweise drahtlos oder drahtgebunden erfolgen, beispielsweise über eine Phasenanschnittmodulation oder ein Steuerbussystem wie z.B. DALI. Weitere Beispiele für die Kommunikationsverbindung beinhalten beispielsweise Bluetooth, IEEE 802.15.3 Wireless Personal Area Networks oder Internet Protocol (IP).

Die Steuerung 101 - beispielsweise durch einen Computer, FPGA oder ASIC implementiert - ist auch mit Messgeräten 121, 122 verbunden.

Die Messgeräte 121, 122 sind eingerichtet, um Messdaten zu erfassen. Die Messdaten sind indikativ für ein Verhalten eines Personenstroms in einem Gebiet, welches von den verschiedenen Leuchten 111-113 beleuchtet wird. Beispiele für Messgeräte 121, 122 umfassen zum Beispiel: Kameras mit Objekt/Bilderkennung; Durchgangszähler; Kassenautomaten mit einer Auswertung nach verkauften Artikeln; Nahfeldpositionierung individueller Teilnehmer des Personenstrom; etc. Dabei können in dem System 100 unterschiedliche Typen von Messgeräten 121, 122 komplementär verwendet werden. Je nach verwendetem Typ von Messgerät 121, 122 können unterschiedliche Observablen gemessen werden. Beispiele für Observablen in Bezug auf den Personenstrom umfassen: instantane Geschwindigkeit des Personenstroms; gemittelte Geschwindigkeit des Personenstroms; und Position von Teilnehmern des Personenstroms. Beispielsweise könnte mittels eines Kassenautomaten ausgewertet werden, welche Artikel von Teilnehmern des Personenstroms besonders nachgefragt sind. Dadurch kann geschlossen werden, dass die instantane Geschwindigkeit des Personenstroms im Bereich der Verkaufsfläche für besonders nachgefragte Artikel vergleichsweise gering ist. Eine entsprechende Aussage könnte auch getroffen werden, indem beispielsweise Videodaten einer Kamera mittels Objekterkennung ausgewertet werden. Dann kann beispielsweise festgestellt werden, dass Personen im Bereich der Verkaufsfläche eine lange Aufenthaltsdauer aufweisen, sodass die Geschwindigkeit des Personenstroms dort vergleichsweise gering ist. Eine entsprechende Aussage könnte auch getroffen werden, indem ein Bewegungsmelder oder ein Durchgangszähler im Bereich der entsprechenden Szene angeordnet ist.

Die Steuerung 101 ist weiterhin verbunden mit einer Datenbank 102. In der Datenbank 102 können beispielsweise Informationen betreffend ein Modell des Verhaltens eines Personenstroms in Abhängigkeit der verwendeten Lichtcharakteristiken hinterlegt sein. Die Datenbank 102 ist optional.

Es ist möglich, dass die Steuerung 101 und/oder die Datenbank 102 zumindest teilweise dezentral in Bezug auf die Leuchten 111-113 und die Messgeräte 121, 122 ausgebildet sind. Beispielsweise kann ein Fernzugriff mittels des Internets erfolgen. Cloud-Implementierungen sind denkbar.

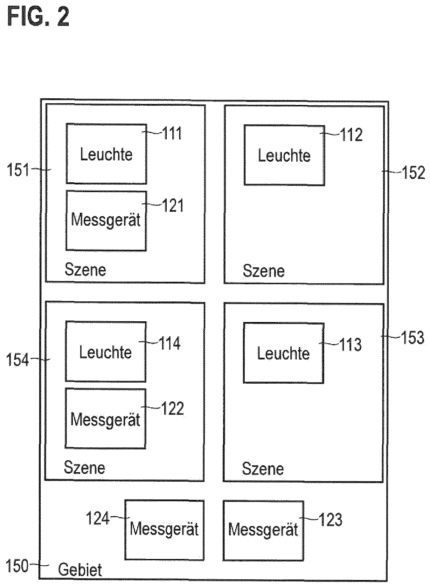

FIG. 2 illustriert Aspekte in Bezug auf eine Zuordnung zwischen Szenen 151-154 eines Gebiets 150 zu Leuchten 111-114 und Messgeräten 121-124. Aus dem Beispiel der FIG. 2 ist ersichtlich, dass das Gebiet 150 mehrere Szenen 151-154 umfasst. Beispielsweise können die unterschiedlichen Szenen 151-154 mit unterschiedlichen Teilbereichen des Gebiets 150 assoziiert sein. Die Szenen 151-154 können auch thematisch gegliedert sein. Beispielsweise könnte das Gebiet 150 einem Bürogebäude entsprechen und die unterschiedlichen Szenen 151-154 könnten beispielsweise einem Eingangsbereich, einem Wartebereich, einem Liftbereich, einem Treppenhausbereich, einem Arbeitsbereich, einer Gemeinschaftsküche, etc. entsprechen. Beispielsweise könnte das Gebiet 150 einem Ladengeschäft entsprechen und die verschiedenen Szenen 151-154 könnten einem Eingangsbereich, einem Ausgangsbereich, einem Kassenbereich, unterschiedlichen Verkaufsbereichen, je nach angebotenem Produkt, etc. entsprechen.

Aus FIG. 2 ist ersichtlich, dass in unterschiedlichen Szenen 151-154 jeweils eine Leuchte 111-114 als Beleuchtungseinrichtung zugeordnet ist, wobei im Allgemeinen pro Szene 151-154 auch mehr als eine Leuchte 111-114 vorgesehen sein könnte. Die jeweilige Leuchte 111-114 ist dabei eingerichtet, um die entsprechende Szene 151-154 mit einer geeigneten Lichtcharakteristik zu beleuchten.

In den Szenen 151, 154 ist jeweils auch ein lokales Messgerät 121, 122 vorgesehen, welches eingerichtet ist, um Messdaten zu erfassen, die indikativ für ein Verhalten eines Personenstroms in der jeweiligen Szene 151, 154 sind. Außerdem sind Messgeräte 123, 124 vorgesehen, die keiner spezifischen Szene 151-154 zugeordnet sind. Beispielsweise könnten diese Messgeräte 123, 124 an einer zentralen Stelle des Gebiets 150 positioniert sein. Die Messgeräte 123, 124 können eingerichtet sein, um Messdaten zu erfassen, die indikativ für ein Verhalten des Personenstroms integriert über die mehreren Szenen 151-154 sind. In weiteren Beispielen wäre es aber auch möglich, dass eines der Messgeräte 123, 194 eingerichtet ist, um Messdaten bereitzustellen, die indikativ für das Verhalten des Personenstroms aufgelöst in ein oder mehreren der Szenen 151-154 ist. Ein Beispiel dafür wäre zum Beispiel ein Kassenautomat in einem Geschäft, der auf Grundlage der registrierten Artikel eine Aussage über das Verhalten des Personenstroms in den unterschiedlichen mit den Artikeln assoziierten Gebieten 151-154 treffen kann.

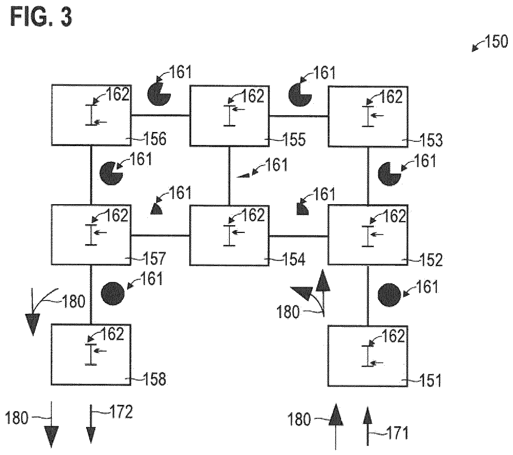

FIG. 3 illustriert Aspekte in Bezug auf eine geometrische Anordnung der verschiedenen Szenen 151-158 eines Gebiets 150 zueinander. FIG. 3 illustriert die geometrische Anordnung der verschiedenen Szenen 151-158 als Graph. Der Personenstrom 180 betritt das Gebiet 150 durch einen Eingang 171; im Allgemeinen könnte auch mehr als ein Eingang vorhanden sein. Der Eingang 171 ist mit einer Szene 151 verbunden. In FIG. 3 ist eine Geschwindigkeit 162 des Personenstroms im Bereich der Szene 151 schematisch illustriert: in dem Beispiel der FIG. 3 ist die Geschwindigkeit 162 im Bereich der Szene 151 vergleichsweise gering (in FIG. 3 durch den Pfeil am unteren Ende der Skala schematisch illustriert), weshalb es im Bereich der Szene 151 zu ungewünschten Verdichtungen des Personenstroms 180 kommen kann. Durch geeignete Lenkung des Personenstroms können solche Verdichtungen im Bereich der Szene 151 vermieden werden.

Der gesamte Personenstrom 180 verlässt dann den Bereich der Szene 151 und betritt den Bereich der Szene 152 (in FIG. 3 durch den vollen Anteil 161 des Personenstroms 180 dargestellt). Dort liegt eine Verzweigung des Personenstroms vor und ein gewisser Anteil 161 des Personenstroms 180 betritt anschließend den Bereich der Szene 154, während der komplementäre Anteil 161 des Personenstroms 180 den Bereich der Szene 153 betritt. Aus FIG. 3 ist ersichtlich, dass der Attraktivitätsfaktor der Szene 153 deutlich größer ist, als der Attraktivitätsfaktor der Szene 154, weswegen ein größerer Anteil 161 des Personenstroms 180 die Szene 153 besucht. In dem Beispiel der FIG. 3 können Verdichtungen insbesondere im Bereich der Szenen 151 und 156 auftreten, weil dort viele Teilnehmer des Personenstroms 180 mit einem großen Geschwindigkeitsgradienten auflaufen. Die nachfolgend beschriebenen Techniken können verwendet werden, um basierend auf der Verwendung geeigneter Lichtcharakteristiken, beispielsweise im Bereich dieser Szenen 151, 156 und/oder im Bereich der angrenzenden Szenen 155, 157, 152 eine geeignete Lenkung des Personenstroms zu erzielen. Damit kann die Lenkung des Personenstroms 180 im Allgemeinen aber nicht lediglich in Bezug auf die Zielgröße der Vermeidung von Verdichtungen erfolgen, sondern auch in Bezug auf andere Zielgrößen.

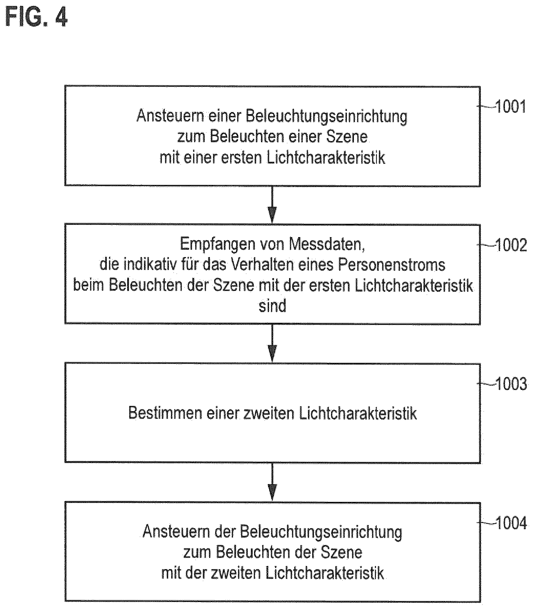

FIG. 4 ist ein Flussdiagramm eines beispielhaften Verfahrens. Das Verfahren gemäß dem Beispiel der FIG. 4 ermöglicht eine Lenkung des Personenstroms. Zunächst wird in Schritt 1001 eine Beleuchtungseinrichtung zum Beleuchten einer Szene mit einer ersten Lichtcharakteristik angesteuert. Die Beleuchtungseinrichtung kann ein oder mehrere Leuchten umfassen. Die Lichtcharakteristik kann beispielsweise eine Lichtstärke, einen Lichtkontrast, einen Lichtdruck und/oder eine Lichtfarbe betreffen. Weitere Beispiele für die Lichtcharakteristik beinhalten die örtliche Lichtverteilung. Beispielsweise kann die örtliche Lichtverteilung basierend auf beweglichen Leuchten oder Matrixelementen eingestellt werden.

Dann werden in Schritt 1002 Messdaten empfangen. Die Messdaten sind indikativ für das Verhalten eines Personenstroms beim Beleuchten der Szene mit der ersten Lichtcharakteristik. Beispielsweise könnten diese Messdaten indikativ für die Geschwindigkeit des Personenstroms und/oder eine Verdichtung des Personenstroms und/oder einen Verzweigungsfaktor des Personenstroms und/oder einen Attraktivitätsfaktor von ein oder mehrerer Szenen des entsprechenden Gebiets für den Personenstrom sein.

Dann wird in Schritt 1003 eine zweite Lichtcharakteristik für die Beleuchtungseinrichtung bestimmt und in Schritt 1004 wird die Beleuchtungseinrichtung zum Beleuchten der Szene mit der zweiten Lichtcharakteristik angesteuert. In Schritt 1003 kann die zweite Lichtcharakteristik basierend auf den Messdaten aus Schritt 1002 bestimmt werden. Dadurch wird eine zielgerichtete Lenkung des Personenstroms basierend auf dem aktuell gemessenen Verhalten möglich. Um beispielsweise eine abrupte Veränderung der Lichtcharakteristik zu vermeiden, wäre es in Schritt 1003 auch möglich, die zweite Lichtcharakteristik basierend auf den ersten Lichtcharakteristik zu bestimmen, beispielsweise indem eine vorgegebene Änderungsrate ausgehend von der ersten Lichtcharakteristik berücksichtigt wird. In Schritt 1003 könnte beispielsweise eine bestimmte Zielgröße für die Lenkung des Personenstroms berücksichtigt werden. Beispiele für solche Zielgrößen umfassen: Vermeidung von Verdichtungen; Steigerung der Attraktivität von bestimmten Szenen; etc.

Darüber hinaus können grundsätzlich in Schritt 1003 unterschiedliche Techniken zum Bestimmen der zweiten Lichtcharakteristik eingesetzt werden. In der erfindungsgemäßen Technik wird ein Regelkreis verwendet, um ein Soll-Verhalten des Personenstroms als Führungsgröße des entsprechenden Regelkreises zuverlässig zu implementieren.

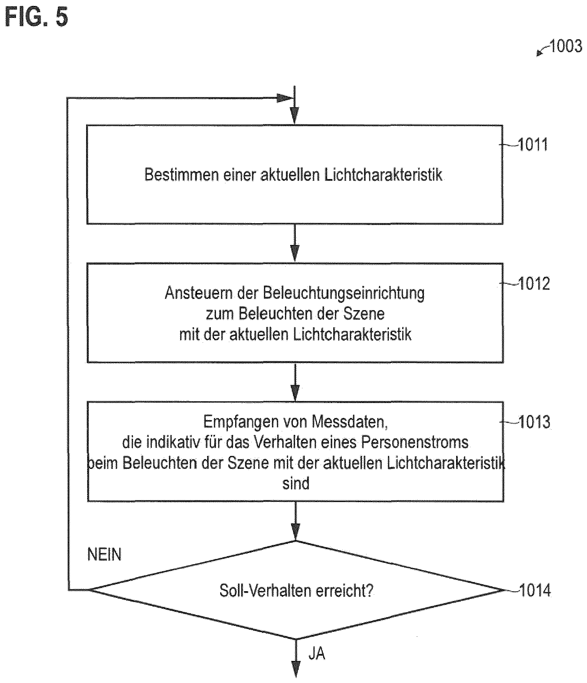

FIG. 5 ist ein Flussdiagramm eines beispielhaften Verfahrens. FIG. 5 illustriert Aspekte in Bezug auf das Bestimmen der zweiten Lichtcharakteristik. Insbesondere illustriert FIG. 5 Aspekte in Bezug auf das Bestimmen der zweiten Lichtcharakteristik durch Implementieren eines Regelkreises. Solche Techniken weisen den Vorteil auf, dass es entbehrlich sein kann, über a-priori Wissen, beispielsweise in Form eines Modells, der Abhängigkeit des Verhaltens des Personenstroms von der verwendeten Lichtcharakteristik zu verfügen.

Zunächst wird in Schritt 1011 eine aktuelle Lichtcharakteristik bestimmt. Beispielsweise könnte die aktuelle Lichtcharakteristik basierend auf einer bestimmten Änderungsrate gegenüber der vorangehend verwendeten Lichtcharakteristik bestimmt werden. In anderen Worten können inkrementelle Änderungen der Lichtcharakteristiken verwendet werden. Dabei kann zum Beispiel eine gewisse Latenz berücksichtigt werden, um eine vorgegebene maximale Änderungsrate der verwendeten Lichtcharakteristik nicht zu überschreiten.

Anschließend wird in Schritt 1012 die Beleuchtungseinrichtung zum Beleuchten der Szene mit der aktuellen Lichtcharakteristik aus Schritt 1011 angesteuert. In Schritt 1013 werden wiederum Messdaten empfangen, die indikativ für das Verhalten des Personenstroms beim Beleuchten der Szene mit der aktuellen Lichtcharakteristik sind. In Schritt 1014 wird dann auf Grundlage der Messdaten aus Schritt 1013 überprüft, ob das aktuell beobachtete Verhalten des Personenstroms bereits dem Soll-Verhalten des Personenstroms entspricht. Ist dies nicht der Fall, so werden Schritte 1011-1014 erneut durchgeführt. Andernfalls wird die aktuelle Lichtcharakteristik weiterverwendet.

Aus FIG. 5 ist also ersichtlich, dass es möglich ist, einen Regelkreis mit einem Soll-Verhalten des Personenstroms als Führungsgröße, den Messdaten als Regelgröße und der Lichtcharakteristik der Beleuchtungseinrichtung als Steuergröße zu implementieren.

Alternativ, d.h. nichterfindungsgemäß, oder zusätzlich zu einer solchen Bestimmung der Lichtcharakteristik basierend auf der Implementierung des Regelkreises kann es in manchen Beispielen auch erstrebenswert sein, zusätzliche Information über eine Abhängigkeit des Verhaltens des Personenstroms von der verwendeten Lichtcharakteristik zu berücksichtigen. Beispielsweise kann es dadurch möglich sein, a-priori Wissen über eine solche Abhängigkeit zur zielgerichteten und schnellen Lenkung des Personenstroms einzusetzen.

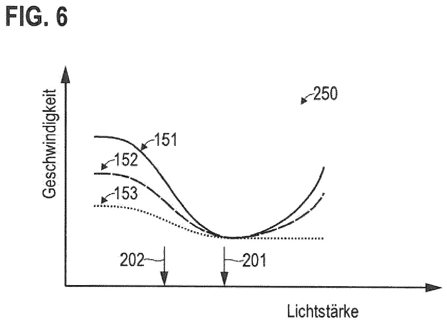

FIG. 6 illustriert Aspekte in Bezug auf ein 250 Modell des Verhaltens des Personenstroms in Abhängigkeit der verwendeten Lichtcharakteristik. Das Modell kann beim Bestimmen der zu verwendenden Lichtcharakteristik berücksichtig werden. Insbesondere illustriert das Beispiel der FIG. 6 ein Modell 250 welches einen Zusammenhang zwischen der Geschwindigkeit des Personenstroms (vertikale Achse in FIG. 6) und der verwendeten Lichtstärke (horizontale Achse in FIG. 6) illustriert. Dabei ist die qualitative und quantitative Abhängigkeit in FIG. 6 rein beispielhaft.

Aus dem Beispiel der FIG. 6 ist ersichtlich, dass das Modell 250 unterschiedliche Geschwindigkeiten des Personenstroms in Abhängigkeit der variablen Lichtstärke für unterschiedliche Szenen 151-153 beschreibt. Die Parametrisierung in Bezug auf die beobachtete Szene 151-153 könnte beispielsweise aufgrund der unterschiedlichen geometrischen Anordnungen der Szenen 151-153 in dem Gebiet 150 der Fall sein und/oder aufgrund unterschiedlicher Typen der Szenen 151-153.

In FIG. 6 sind eine erste Lichtstärke 201 und eine zweite Lichtstärke 202 hervorgehoben. Beispielsweise könnte bei Beleuchtung der Szene 151 mit der ersten Lichtstärke 201 eine zu geringe Geschwindigkeit des Personenstroms 180 durch die Messdaten indiziert werden. Dann könnte die zweite Lichtstärke 202 als für die Lenkung des Personenstroms 180 geeignet bestimmt werden. Derart kann es also möglich sein, die zweite Lichtstärke 202 basierend auf dem Modell 250 des Verhaltens des Personenstroms, hier insbesondere der Geschwindigkeit, in Abhängigkeit von der verwendeten Lichtcharakteristik, hier insbesondere der Lichtstärke, zu bestimmen.

Dabei sind grundsätzlich unterschiedliche Techniken möglich, um das Modell 250 zu erhalten bzw. zu trainieren. Beispielsweise könnte das Modell durch Techniken des Maschinenlernens bestimmt werden. Dazu können über einen längeren Zeitraum verwendete Lichtcharakteristiken korreliert werden mit dem beobachteten Verhalten des Personenstroms. Beispielsweise könnten die Messdaten über eine Zeitdauer von mindestens 10 Minuten, optional mindestens 30 Minuten, weiter optional mindestens 120 Minuten überwacht werden und anschließend das Modell 250 basierend auf dem Überwachen der Messdaten trainiert werden. Dabei ist es grundsätzlich auch möglich, Referenz-Messdaten zu berücksichtigen, die für andere Gebiete oder andere Szenen erfasst wurden.

Neben solchen Abhängigkeiten des Modells 250 von der Geometrie oder den Typen der Szenen 151-153, wie in FIG. 6 illustriert, kann das Modell auch andere Umgebungsparameter berücksichtigen.

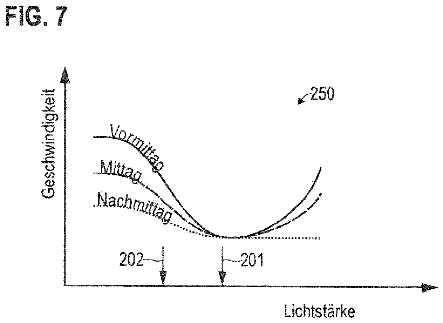

FIG. 7 illustriert Aspekte in Bezug auf ein Modell des Verhaltens eines Personenstroms in Abhängigkeit von einer verwendeten Lichtcharakteristik. Dabei entspricht das Beispiel der FIG. 7 grundsätzlich dem Beispiel der FIG. 6. In FIG. 7 ist jedoch weiterhin eine Parametrisierung des Modells 250 in Bezug auf Umgebungsparameter, hier insbesondere der Tageszeit, dargestellt. Im Allgemeinen können auch andere Umgebungsparameter berücksichtigt werden, wie beispielsweise Wetter, Wochentag, Tageslichthelligkeit, Außentemperatur oder Innentemperatur. Beispielsweise können entsprechende Steuerdaten empfangen werden, die indikativ für ein oder mehrere Umgebungsparameter sind und das Bestimmen der zu verwendenden Lichtcharakteristik, hier der Lichtstärke 202, kann basierend auf den Steuerdaten erfolgen.

Zusammenfassend wurden voranstehend Techniken beschrieben, um eine geeignete Lenkung eines Personenstroms vorzunehmen. Der Personenstrom wird dabei durch eine Veränderung der Lichtcharakteristik, die bei der Beleuchtung von einer oder mehrerer Szenen eines Gebiets verwendet wird, gelenkt. Die Lenkung des Personenstroms kann im Allgemeinen hinsichtlich unterschiedlicher Zielgrößen erfolgen.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

## Patentansprüche

1. Verfahren, das die Schritte umfasst:
- (a) Ansteuern einer Beleuchtungseinrichtung (111-113) zum Beleuchten mindestens einer Szene (151-158) in einem Gebiet (150) mit einer ersten Lichtcharakteristik (201, 202),
- (b) Empfangen von Messdaten, die indikativ für ein Verhalten eines Personenstroms (180) in dem Gebiet (150) beim Beleuchten der mindestens einen Szene (151-158) mit der ersten Lichtcharakteristik (201, 202) sind,
- (c) Bestimmen einer zweiten Lichtcharakteristik (201, 202) basierend auf den Messdaten, und
- (d) Ansteuern der Beleuchtungseinrichtung (111-113) zum Beleuchten der mindestens einen Szene (151-158) mit der zweiten Lichtcharakteristik (201, 202),
**dadurch gekennzeichnet, dass** das Verfahren weiterhin die Schritte umfasst:
- (e) Empfangen von Messdaten, die indikativ für ein Verhalten des Personenstroms (180) in dem Gebiet (150) beim Beleuchten der mindestens einen Szene (151-158) mit der zweiten Lichtcharakteristik (201, 202) sind, und
- (f) Wiederholen der Schritte (c) - (e), um die zweite Lichtcharakteristik (201, 202) mit Hilfe eines Regelkreises mit einem Soll-Verhalten des Personenstroms (180) als Führungsgröße, den Messdaten als Regelgröße, und der zweiten Lichtcharakteristik (201, 202) der Beleuchtungseinrichtung (111-113) als Steuergröße iterativ zu verändern, bis die Messdaten ein Verhalten des Personenstroms (180) indizieren, das dem Soll-Verhalten entspricht.

2. Verfahren nach Anspruch 1,
wobei die zweite Lichtcharakteristik (201, 202) weiterhin basierend auf einem Modell (250) des Verhaltens des Personenstroms (180) in Abhängigkeit der zweiten Lichtcharakteristik (201, 202) bestimmt wird.

3. Verfahren nach Anspruch 2, das weiterhin umfasst:
- Überwachen der Messdaten über eine Zeitdauer von mindestens 10 Minuten, optional mindestens 30 Minuten, weiter optional mindestens 120 Minuten, und
- Trainieren des Modells (250) basierend auf dem Überwachen der Messdaten.

4. Verfahren nach einem der Ansprüche 2 oder 3, das weiterhin umfasst:
- Empfangen von Referenz-Messdaten, die indikativ für ein Verhalten mindestens eines weiteren Personenstrom (180) in mindestens einem weiteren Gebiet (150) sind, und
- Trainieren des Modells (250) basierend auf den Referenz-Messdaten.

5. Verfahren nach einem der Ansprüche 2 - 4,
wobei das Modell (250) unterschiedliche Verhalten des Personenstroms (180) in Abhängigkeit der zweiten Lichtcharakteristik (201, 202) für unterschiedliche geometrischen Anordnungen der mindestens einen Szene (151-158) in dem Gebiet (150) beschreibt.

6. Verfahren nach einem der Ansprüche 2 - 5,
wobei das Modell (250) unterschiedliche Verhalten des Personenstroms (180) in Abhängigkeit der zweiten Lichtcharakteristik (201, 202) für unterschiedliche Typen der mindestens einen Szene (151-158) beschreibt.

7. Verfahren nach einem der Ansprüche 2 - 6,
wobei das Modell (250) unterschiedliche Verhalten des Personenstroms (180) in Abhängigkeit der zweiten Lichtcharakteristik (201, 202) für unterschiedliche Werte mindestens eines Umgebungsparameters der mindestens einen Szene (151-158) und/oder des Gebiets (150) beschreibt.

8. Verfahren nach einem der voranstehenden Ansprüche, das weiterhin umfasst:
- Empfangen von Steuerdaten, die indikativ für mindestens einen Umgebungsparameter der mindestens einen Szene (151-158) und/oder des Gebiet (150) sind,
wobei das Bestimmen der zweiten Lichtcharakteristik (201, 202) weiterhin auf den Steuerdaten basiert.

9. Verfahren nach Anspruch 7 oder 8,
wobei der mindestens eine Umgebungsparameter aus folgender Gruppe ausgewählt ist: Tageszeit; Wetter; Wochentag; Tageslichthelligkeit; Außentemperatur; und Innentemperatur.

10. Verfahren nach einem der voranstehenden Ansprüche,
wobei die zweite Lichtcharakteristik (201, 202) weiterhin basierend auf einer vorgegebenen Änderungsrate ausgehend von der ersten Lichtcharakteristik (201, 202) bestimmt wird,
wobei optional die Änderungsrate einer Zeitdauer entspricht, die größer ist als eine mittlere Verweildauer von Teilnehmern des Personenstroms (180) in der mindestens einen Szene (151-158).

11. Verfahren nach einem der voranstehenden Ansprüche,
wobei die Messdaten indikativ für Elemente sind, die aus folgender Gruppe ausgewählt sind: eine Geschwindigkeit (162) des Personenstroms (180); mindestens eine Verdichtung des Personenstroms (180); ein Verzweigungsfaktor des Personenstroms (180); und ein Attraktivitätsfaktor der mindestens einen Szene (151-158) für den Personenstrom.

12. Verfahren nach einem der voranstehenden Ansprüche, das weiterhin umfasst:
- Ansteuern mindestens eines Messgeräts (121) zum Erfassen der Messdaten, wobei das mindestens eine Messgerät (121) eine oder mehrere der folgenden Observablen misst: instantane Geschwindigkeit des Personenstroms (180) an der mindestens einen Szene (151-158); gemittelte Geschwindigkeit des Personenstroms (180) an der mindestens einen Szene (151-158); und Position von Teilnehmern des Personenstroms (180) in Bezug auf die mindestens eine Szene (151-158).

13. Verfahren nach einem der voranstehenden Ansprüche,
wobei die erste Lichtcharakteristik (201, 202) und/oder die zweite Lichtcharakteristik (201, 202) ein oder mehrere Elemente der folgenden Gruppe umfasst: Lichtstärke; Lichtkontrast; Lichtdruck; Lichtfarbe; und örtliche Lichtverteilung.

14. Steuerung mit mindestens einem Prozessor, der eingerichtet ist, um die folgenden Schritte durchzuführen:
- (a) Ansteuern einer Beleuchtungseinrichtung (111-113) zum Beleuchten mindestens einer Szene (151-158) in einem Gebiet (150) mit einer ersten Lichtcharakteristik (201, 202),
- (b) Empfangen von Messdaten, die indikativ für ein Verhalten eines Personenstroms (180) in dem Gebiet (150) beim Beleuchten der mindestens einen Szene (151-158) mit der ersten Lichtcharakteristik (201, 202) sind,
- (c) Bestimmen einer zweiten Lichtcharakteristik (201, 202) basierend auf den Messdaten, und
- (d) Ansteuern der Beleuchtungseinrichtung (111-113) zum Beleuchten der mindestens einen Szene (151-158) mit der zweiten Lichtcharakteristik (201, 202), **dadurch gekennzeichnet, dass** der Prozessor weiterhin eingerichtet ist, die folgenden Schritte durchzuführen:
- (e) Empfangen von Messdaten, die indikativ für ein Verhalten des Personenstroms (180) in dem Gebiet (150) beim Beleuchten der mindestens einen Szene (151-158) mit der zweiten Lichtcharakteristik (201, 202) sind, und
- (f) Wiederholen der Schritte (c) - (e), um die zweite Lichtcharakteristik (201, 202) mit Hilfe eines einen Regelkreises mit einem Soll-Verhalten des Personenstroms (180) als Führungsgröße, den Messdaten als Regelgröße und der zweiten Lichtcharakteristik (201, 202) der Beleuchtungseinrichtung (111-113) als Steuergröße iterativ zu verändern, bis die Messdaten ein Verhalten des Personenstroms (180) indizieren, das dem Soll-Verhalten entspricht.

## Claims

1. Method comprising the steps of:
- (a) activating an illumination device (111-113) for illuminating at least one scene (151-158) in a region (150) having a first light characteristic (201, 202),
- (b) receiving measurement data that are indicative of a behavior of a flow of people (180) in the region (150) given illumination of the at least one scene (151-158) having the first light characteristic (201, 202),
- (c) determining a second light characteristic (201, 202) based on the measurement data, and
- (d) activating the illumination device (111-113) for illuminating the at least one scene (151-158) having the second light characteristic (201, 202),
**characterized in that** the method furthermore comprises the steps of:
- (e) receiving measurement data that are indicative of a behavior of the flow of people (180) in the region (150) given illumination of the at least one scene (151-158) having the second light characteristic (201, 202), and
- (f) repeating steps (c) - (e) in order to iteratively modify the second light characteristic (201, 202) with the aid of a control loop having a desired behavior of the flow of people (180) as a reference variable, the measurement data as a controlled variable, and the second light characteristic (201, 202) of the illumination device (111-113) as an actuating variable, until the measurement data indicate a behavior of the flow of people (180) that corresponds to the desired behavior.

2. Method according to claim 1,
wherein the second light characteristic (201, 202) is furthermore determined, based on a model (250) of the behavior of the flow of people (180), depending on the second light characteristic (201, 202).

3. Method according to claim 2, furthermore comprising:
- monitoring the measurement data over a period of at least 10 minutes, optionally at least 30 minutes, furthermore optionally at least 120 minutes, and
- training the model (250) based on the monitoring of the measurement data.

4. Method according to any one of claims 2 to 3, furthermore comprising:
- receiving reference measurement data that are indicative of a behavior of at least one further flow of people (180) in at least one further region (150), and
- training the model (250) based on the reference measurement data.

5. Method according to any one of claims 2 - 4,
wherein the model (250) describes different behaviors of the flow of people (180), depending on the second light characteristic (201, 202), for different geometric arrangements of the at least one scene (151-158) in the region (150).

6. Method according to any one of claims 2 - 5,
wherein the model (250) describes different behavior of the flow of people (180) depending on the second light characteristic (201, 202) for different types of the at least one scene (151-158).

7. Method according to any one of claims 2 - 6,
wherein the model (250) describes different behavior of the flow of people (180) depending on the second light characteristic (201, 202) for different values of at least one environmental parameter of the at least one scene (151-158) and/or of the region (150).

8. Method according to any one of the preceding claims, furthermore comprising:
- receiving control data that are indicative of at least one environmental parameter of the at least one scene (151-158) and/or of the region (150),
wherein determining the second light characteristic (201, 202) is furthermore based on the control data.

9. Method according to claim 7 or 8,
wherein the at least one environmental parameter is selected from the following group: time of day, weather, day of the week, daylight brightness, outside temperature; and inside temperature.

10. Method according to any one of the preceding claims,
wherein the second light characteristic (201, 202) is furthermore determined based on a predetermined rate of change, starting from the first light characteristic (201, 202),
wherein the rate of change optionally corresponds to a time duration that is greater than a mean residence time of participants of the flow of people (180) in the at least one scene (151-158).

11. Method according to any one of the preceding claims,
wherein the measurement data are indicative of elements selected from the following group: a velocity (162) of the flow of people (180); at least one concentration of the flow of people (180); a branching factor of the flow of people (180); and an attraction factor of the at least one scene (151 -158) for the flow of people.

12. Method according to any one of the preceding claims, furthermore comprising:
- controlling at least one measuring device (121) for acquiring the measurement data, wherein the at least one measuring device (121) measures one or more of the following observables: instantaneous velocity of the flow of people (180) at the at least one scene (151-158); average velocity of the flow of people (180) at the at least one scene (151-158); and position of participants of the flow of people (180) with respect to the at least one scene (151-158).

13. Method according to any one of the preceding claims,
wherein the first light characteristic (201, 202) and/or the second light characteristic (201, 202) comprises one or more elements of the following group: luminous intensity; light contrast, light pressure; light color; and local light distribution.

14. Controller having at least one processor which is configured to implement the following steps:
- (a) activating an illumination device (111-113) for illuminating at least one scene (151-158) in a region (150) having a first light characteristic (201, 202),
- (b) receiving measurement data that are indicative of a behavior of a flow of people (180) in the region (150) given illumination of the at least one scene (151-158) having the first light characteristic (201, 202),
- (c) determining a second light characteristic (201, 202) based on the measurement data, and
- (d) activating the illumination device (111-113) for illuminating the at least one scene (151-158) having the second light characteristic (201, 202),
**characterized in that** the processor is furthermore configured to implement the following steps:
- (e) receiving measurement data that are indicative of a behavior of the flow of people (180) in the region (150) given illumination of the at least one scene (151-158) having the second light characteristic (201, 202), and
- (f) repeating steps (c) - (e) in order to iteratively modify the second light characteristic (201, 202) with the aid of a control loop with a desired behavior of the flow of people (180) as a reference variable, the measurement data as a controlled variable, and the second light characteristic (201, 202) of the illumination device (111-113) as an actuating variable, until the measurement data indicate a behavior of the flow of people (180) that corresponds to the desired behavior.

## Revendications

1. Procédé comprenant les étapes de :
- (a) commande d'un dispositif d'éclairage (111-113) pour l'éclairage d'au moins une scène (151-158) dans une zone (150) avec une première caractéristique d'éclairage (201, 202),
- (b) réception de données de mesure, qui sont indicatives d'un comportement d'un flux de personnes (180) dans la zone (150) lors de l'éclairage de l'au moins une scène (151-158) avec la première caractéristique d'éclairage (201, 202),
- (c) détermination d'une deuxième caractéristique d'éclairage (201, 202) sur la base des données de mesure, et
- (d) commande du dispositif d'éclairage (111-113) pour l'éclairage de l'au moins une scène (151-158) avec la deuxième caractéristique d'éclairage (201, 202),
**caractérisé en ce que** le procédé comprend en outre les étapes de :
- (e) réception de données de mesure, qui sont indicatives d'un comportement du flux de personnes (180) dans la zone (150) lors de l'éclairage de l'au moins une scène (151-158) avec la deuxième caractéristique d'éclairage (201, 202), et
- (f) répétition des étapes (c) à (e) pour modifier itérativement la deuxième caractéristique d'éclairage (201, 202) à l'aide d'un circuit de régulation avec un comportement de consigne du flux de personnes (180) comme grandeur de référence, les données de mesure comme grandeur de réglage et la deuxième caractéristique d'éclairage (201, 202) du dispositif d'éclairage (111-113) comme grandeur pilote, jusqu'à ce que les données de mesure indiquent un comportement du flux de personnes (180) correspondant au comportement de consigne.

2. Procédé selon la revendication 1,
dans lequel la deuxième caractéristique d'éclairage (201, 202) est déterminée en outre sur la base d'un modèle (250) du comportement du flux de personnes (180) en fonction de la deuxième caractéristique d'éclairage (201, 202).

3. Procédé selon la revendication 2, lequel comprend en outre :
- la surveillance des données de mesure pendant une période de temps d'au moins 10 minutes, facultativement au moins 30 minutes, de manière encore plus facultative au moins 120 minutes, et
- l'entraînement du modèle (250) sur la base de la surveillance des données de mesure.

4. Procédé selon l'une quelconque des revendications 2 ou 3, lequel comprend en outre :
- la réception de données de mesure de référence, qui sont indicatives d'un comportement d'au moins un autre flux de personnes (180) dans au moins une autre zone (150), et
- l'entraînement du modèle (250) sur la base des données de mesure de référence.

5. Procédé selon l'une quelconque des revendications 2 à 4,
dans lequel le modèle (250) décrit différents comportements du flux de personnes (180) en fonction de la deuxième caractéristique d'éclairage (201, 202) pour différentes dispositions géométriques de l'au moins une scène (151-158) dans la zone (150).

6. Procédé selon l'une quelconque des revendications 2 à 5,
dans lequel le modèle (250) décrit différents comportements du flux de personnes (180) en fonction de la deuxième caractéristique d'éclairage (201, 202) pour différents types de l'au moins une scène (151-158).

7. Procédé selon l'une quelconque des revendications 2 à 6,
dans lequel le modèle (250) décrit différents comportements du flux de personnes (180) en fonction de la deuxième caractéristique d'éclairage (201, 202) pour différentes valeurs d'au moins un paramètre environnemental de l'au moins une scène (151-158) et/ou de la zone (150).

8. Procédé selon l'une quelconque des revendications précédentes, lequel comprend en outre :
- la réception de données pilotes, qui sont indicatives d'au moins un paramètre environnemental de l'au moins une scène (151-158) et/ou de la zone (150),
la détermination de la deuxième caractéristique d'éclairage (201, 202) étant en outre basée sur les données pilotes.

9. Procédé selon la revendication 7 ou 8,
dans lequel l'au moins un paramètre environnemental est choisi dans le groupe suivant : moment de la journée, conditions météorologiques, luminance de la lumière du jour, température extérieure et température intérieure.

10. Procédé selon l'une quelconque des revendications précédentes,
dans lequel la deuxième caractéristique d'éclairage (201, 202) est déterminée en outre sur la base d'un taux de modification prédéterminé à partir de la première caractéristique d'éclairage (201, 202),
le taux de modification correspondant facultativement à une période de temps qui est supérieure à une durée de séjour moyenne de participants au flux de personnes (180) dans l'au moins une scène (151-158).

11. Procédé selon l'une quelconque des revendications précédentes,
dans lequel les données de mesure sont indicatives d'éléments qui sont choisis dans le groupe suivant : une vitesse (162) du flux de personnes (180) ; au moins un compactage du flux de personnes (180) ; un facteur de bifurcation du flux de personnes (180) ; et un facteur d'attractivité de l'au moins une scène (151-158) pour le flux de personnes.

12. Procédé selon l'une quelconque des revendications précédentes, lequel comprend en outre :
- la commande d'au moins un appareil de mesure (121) pour la détection des données de mesure, l'au moins un appareil de mesure (121) mesurant une ou plusieurs des données observables suivantes : vitesse instantanée du flux de personnes (180) dans l'au moins une scène (151-158) ; vitesse moyenne du flux de personnes (180) dans l'au moins une scène (151-158) ; et position de participants du flux de personnes (180) par rapport à l'au moins une scène (151-158).

13. Procédé selon l'une quelconque des revendications précédentes,
dans lequel la première caractéristique d'éclairage (201, 202) et/ou la deuxième caractéristique d'éclairage (201, 202) comprennent un ou plusieurs éléments du groupe suivant : intensité lumineuse ; contraste de lumière ; pression de lumière ; couleur de lumière ; et distribution de lumière locale.

14. Commande comprenant au moins un processeur, qui est conçu pour exécuter les étapes suivantes :
- (a) commande d'un dispositif d'éclairage (111-113) pour l'éclairage d'au moins une scène (151-158) dans une zone (150) avec une première caractéristique d'éclairage (201, 202),
- (b) réception de données de mesure, qui sont indicatives d'un comportement d'un flux de personnes (180) dans la zone (150) lors de l'éclairage de l'au moins une scène (151-158) avec la première caractéristique d'éclairage (201, 202),
- (c) détermination d'une deuxième caractéristique d'éclairage (201, 202) sur la base des données de mesure, et
- (d) commande du dispositif d'éclairage (111-113) pour l'éclairage de l'au moins une scène (151-158) avec la deuxième caractéristique d'éclairage (201, 202),
**caractérisée en ce que** le processeur est en outre conçu pour exécuter les étapes suivantes :
- (e) réception de données de mesure, qui sont indicatives d'un comportement du flux de personnes (180) dans la zone (150) lors de l'éclairage de l'au moins une scène (151-158) avec la deuxième caractéristique d'éclairage (201, 202), et
- (f) répétition des étapes (c) à (e) pour modifier itérativement la deuxième caractéristique d'éclairage (201, 202) à l'aide d'un circuit de régulation avec un comportement de consigne du flux de personnes (180) comme grandeur de référence, les données de mesure comme grandeur de réglage et la deuxième caractéristique d'éclairage (201, 202) du dispositif d'éclairage (111-113) comme grandeur pilote, jusqu'à ce que les données de mesure indiquent un comportement du flux de personnes (180) correspondant au comportement de consigne.
